# EUROPEAN PATENT APPLICATION

(11) **EP 1 437 868 A2**
(43) Date of publication of application: **14.07.2004**
(21) Application number: 04000172.9
(22) Date of filing: 07.01.2004
(51) Int. Cl.: H04L 12/56

(54) **Communication network control apparatus and method**

(30) Priority: 10.01.2003 JP 2003004054; 15.12.2003 JP 2003416237
(71) Applicant: MATSUSHITA ELECTRIC INDUSTRIAL CO., LTD., Kadoma-shi, Osaka 571-8501 (JP)
(72) Inventor: Takei, Ichiro, Tokyo 166-0014 (JP); Itoh, Tomoaki, Kawasaki-shi Kanagawa 214-0036 (JP); Sato, Junichi, Machida-shi Tokyo 195-0053 (JP); Yamaguchi, Takao, Kokubunji-shi Tokyo 158-0022 (JP)
(74) Representative: Grünecker, Kinkeldey, Stockmair & Schwanhäusser Anwaltssozietät

(57) **Abstract**

In the present invention, a cable network upstream from base stations is constructed in MPLS, and when a radio communication terminal moves from an area of a base station currently communicating with the terminal to an adjacent area of another base station and enters a diversity areas of the two base stations, a communication network control apparatus provides paths of MPLS to the two base stations, and copies a packet to the radio communication terminal to forward to the two base stations. Then, when the radio communication terminal moves out of the diversity area and enters an area of either of the base stations, the apparatus disconnects the path (LSP) to the base station whose area the terminal moves out of. It is thereby possible to assure QoS to the radio communication terminal, while eliminating the packet loss due to handover.

## Description

### BACKGROUND OF THE INVENTION

### Field of the Invention

The present invention relates to a communication network control apparatus and method that control communication networks when a radio communication terminal moves and performs handover.

### Description of Related Art

When a radio communication terminal moves from an area of a base station communicating with the terminal currently to an area of another base station starting communicating with the terminal, the terminal performs handover to switch base stations to communicate.

However, when the radio communication terminal performs handover, there are cases that a data packet is transferred to the terminal before the connection is not switched between basestations.Thetransferred packet does not arrive at the radio communication terminal properly, and a packet loss occurs.

Further, when the radio communication terminal moves fast, a time allowed to switch connections becomes short.

Furthermore, in recent radio systems, the picocell has proceeds, and an area (cell) has become small which a single base station is capable covering.

With the picocell thus proceeding, processing for switching connections occurs at a high rate, as a radio communication terminal moves. In such a situation, a packet loss tends to occur. Furthermore, coincidences of the picocell and fast moving of a radio communication terminal extremely degrade the communication quality in the radio communication terminal.

Then, a method has been proposed for reserving a flow transmission band or preventing occurrences of loss of data packet when a radio communication terminal performs handover while moving.

(For example, see Patent Document 1 (Japanese Laid-Open Patent Publication No.H11-313358), Non Patent Document 1 (Wen-Tsuen Chen, Li-Chi Huang, "RSVP Mobility Support: A Signaling Protocol for Integrated Services Internet with Mobile Hosts", IEEE INFOCOM 2000, pp. 1283-1292), Non-Patent Document 2 (Zhong Ren, Chen-Khong Tham, Chun-Choong Foo, Chi-Chung Ko, "Integration of Mobile IP and Multi-Protocol Label Switching", IEEE 2001, pp.2123-2127), and Non-Patent Document 3 (Heechang Kim, Kuok-Shoong D. Wong, Wai Chen and Chi Leung Lau, "Mobility-Aware MPLS in IP-based Wireless Access Networks", IEEE 2001, pp.3444-3448).) "A mobile communication network control apparatus" disclosed in Patent Document 1 is of a method for preventing occurrences of loss of data packet.

Specifically, in the method, a multipath connection is set toward a radio communication base station communicating with a radio communication terminal and radio communication base stations around the radio communication terminal, and data packets are flooded on the set multipath connection. Thus, the packet loss is thus prevented by flooding data packets on the multipath connection.

Non-Patent Document 1 describes a method of reserving the flow transmission band. In the method, using RSVP (Resource Servation Protocol) that is a protocol to reserve a resource on a communication path, a transmission path is ensured to provide QoS assurance (reservation of flow transmission band).

Specifically, the method is to reserve transmission paths to base stations around a radio communication terminal before performing handover, using RSVP. QoS assurance is thus provided to the radio communication terminal also after performing the handover.

Non-Patent Documents 2 and 3 both describe a method of reserving a flow transmission band.

In the method, QoS assurance is provided using MPLS (Multi-Protocol Label Switching).

The method disclosed in Patent Document 1 intends to eliminate the packet loss due to handover, and does not consider anything about QoS assurance to radio communication terminals. Therefore, the method may not provide QoS assurance to radio communication terminals.

Non-Patent Document 2 intends to provide QoS assurance to radio communication terminals even after performing handover, and does not consider the packet loss.

Further, in Non-Patent Document 1, since a transmission path is reserved for a base station that does not communicate with a radio communication terminal actually, there arises a problem in terms of effective use of network. Specifically, when the number of radio communication terminals increases that connect to the network, a lot of bands remain unused and unused communication channels are left that can be used. Further, increases in useless communication channel result in a possibility that a packet loss occurs when a radio communication terminal moves fast.

Further, as in Non-Patent Document 1, Non-Patent Documents 2 and 3 intend to provide communication terminals with QoS assurance using RSVP. These methods do not consider the packet loss either, and have possibilities of occurrence of packet loss when a radio communication terminal performs fast communications.

Thus, the conventional methods have problems that it is not possible to provide QoS assurance to radio communication terminals while eliminating the packet loss due to handover.

### SUMMARY OF THE INVENTION

5

It is an object of the present invention to achieve QoS assurance to a radio communication terminal while eliminating the packet loss due to handover.

In the present invention, a cable network upstream from base stations is constructed in MPLS, and when a radio communication terminal moves from an area of a base station currently communicating with the terminal to an adjacent area of another base station and enters a diversity areas of the two base stations, a communication network control apparatus provides paths (LSP: Label Switched Path) of MPLS to the two base stations, and copies a packet to the radio communication terminal to forward to both of the two base stations. Then, when the radio communication terminal moves out of the diversity area and enters the area of either of the base stations, the apparatus disconnects the path (LSP) to the base station whose area the terminal moves out of.

It is thereby possible to assure QoS to the radio communication terminal and eliminate the packet loss in handover.

### BRIEF DESCRIPTION OF THE SEVERAL VIEWS of DRAWINGS

The above and other objects and features of the invention will appear more fully hereinafter from a consideration of the following description taken in connection with the accompanying drawing wherein one example is illustrated by way of example.
FIG.1 is a block diagram illustrating a configuration of communication networks and a relay apparatus in a first embodiment of the present invention;
FIG.2 is a view showing a forwarding table in the first embodiment;
FIG.3 is a view showing an example of a configuration of an MPLS header;
FIG.4 is a flowchart to explain the table rewrite operation in a communication system when a radio communication terminal enters a diversity area according to the first embodiment;
FIG.5 is a view showing an example of a configuration of DIVIN_MES;
FIG.6 is a flowchart to explain the table rewrite operation in a table rewriting section when the radio communication terminal enters the diversity area according to the first embodiment;
FIG.7 is a view showing a table in the first embodiment;
FIG.8 is a flowchart to explain the table rewrite operation in the communication system when the radio communication terminal moves out of the diversity area according to the first embodiment;
FIG. 9 is a view showing an example of a configuration of DIVOUT_MES;
FIG.10 is a flowchart to explain the table rewrite operation in the table rewriting section when the radio communication terminal moves out of the diversity area according to the first embodiment;
FIG.11 is another view showing a table in the first embodiment;
FIG.12 is a flowchart to explain the packet forward operation in the relay apparatus in the first embodiment;
FIG.13 is a flowchart to explain a label fetching section in the first embodiment;
FIG.14 is a flowchart to explain the operations in a table check section and a packet copy section in the first embodiment;
FIG. 15 is a schematic view of a communication system according to a second embodiment of the present invention;
FIG.16 is a diagram illustrating a relay apparatus according the second embodiment;
FIG.17 is a configuration view of a DIV table according to the second embodiment;
FIG.18 is a flow diagram of operation in the relay apparatus when a radio communication terminal enters a diversity area according to the second embodiment;
FIG.19 is a configuration view of DIVIN_MES according to the second embodiment;
FIG.20 is a flow diagram of DIV table rewrite processing in the relay apparatus according to the second embodiment;
FIG.21 is a diagram to explain a specific example of the DIV table rewrite processing in the relay apparatus according to the second embodiment;
FIG.22 is a flow diagram of path formation processing in the relay apparatus according to the second embodiment;
FIG.23 is a first view to explain a specific example of the path formation processing in the relay apparatus according to the second embodiment;
FIG.24 is a second view to explain the specific example of the path formation processing in the relay apparatus according to the second embodiment;
FIG.25 is a flow diagram of packet forward processing in the relay apparatus according to the second embodiment;
FIG.26 is a flow diagram of operation in the relay apparatus when the radio communication terminal moves out of the diversity area according to the second embodiment;
FIG.27 is a configuration view of DIVOUT_MES according to the second embodiment;
FIG. 28 is a flow diagram of path deletion processing in the relay apparatus according to the second embodiment;
FIG.29 is a view to explain a specific example of the path deletion processing in the relay apparatus according to the second embodiment; and
FIG.30 is a diagram illustrating a configuration of a relay apparatus according to a third embodiment of the present invention.

### DETAILED DESCRIPTION OF THE PREFERRED EMBODIMENTS

### (First embodiment)

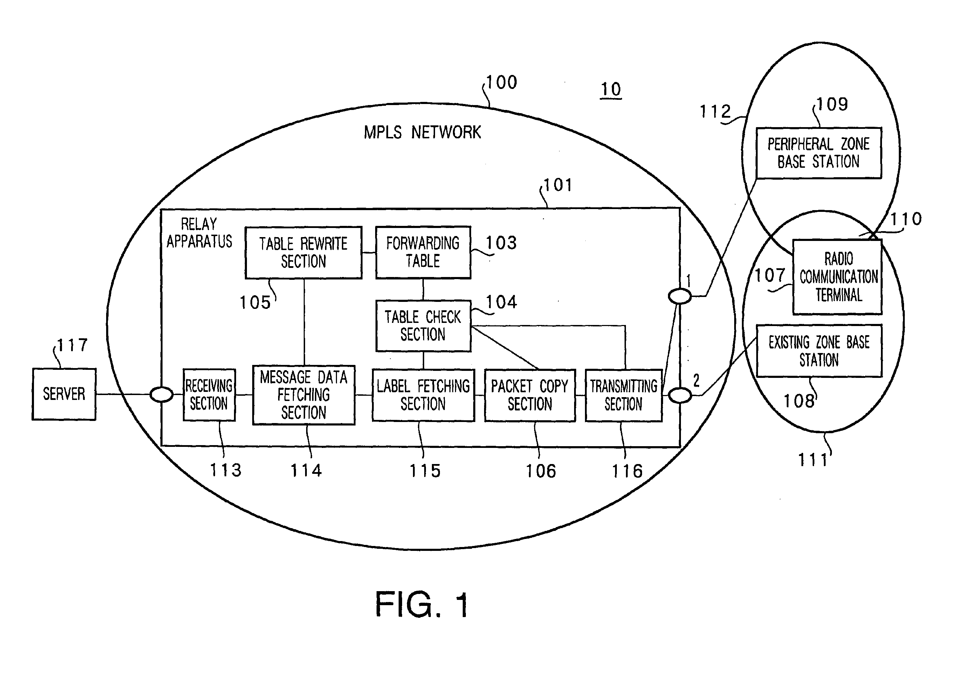

The first embodiment of present invention will be described below. Referring to FIG.1, a communication system will be described first that includes a relay apparatus to which a communication network control apparatus according to the first embodiment is applied. FIG.1 is a diagram illustrating a configuration of the communication system provided with communication networks and the relay apparatus in the first embodiment of the present invention.

Communication system 10 is comprised of server 117, relay apparatus 101 on MPLS network 100, existing zone base station 109 and peripheral zone base station 109 that are connected via networks. Relay apparatus 101 applies the communication network control apparatus of the present invention.

In communication system 10, radio communication terminal 107 is connected to existing zone base station 108 and peripheral zone base station 109 via radio communication networks. Radio communication terminal 107 continues communications while performing handover on the radio communication networks. The first embodiment assumes that radio communication terminal 107 moves from zone 111 that existing zone base station 108 covers to zone 112 that peripheral zone base station 109 covers while performing handover.

Existing zone base station 108 is a base station with which radio communication terminal 107 is currently communicating. Peripheral zone base station 109 is a base station that covers zone 112 adjacent to existing zone base station 108.

A region denoted by "110" in the figure indicates a diversity area where zone 111 that existing zone base station 108 covers and zone 112 that peripheral zone base station 109 covers overlap each other.

A configuration of relay apparatus 101 will be described below.

Receiving section 113 receives a packet transmitted from server 117 to output to message data fetching section 114.

Message data fetching section 114 checks whether the packet output from receiving section 113 is a message packet, and when the packet is a message packet, provides the type and content of the message to table rewrite section 105. When the packet output from receiving section 113 is not a message packet, the section 114 provides the packet to label fetching section 115. According to the type and content of the message received from message data fetching section 114, table rewrite section 105 rewrites forwarding table 103. The table rewrite operation in table rewrite section 105 will be described later specifically.

Label fetching section 115 fetches information of MPLS label from the packet output from message fetching section 114 to provide to table check section 104.

Table check section 104 checks forwarding table 103 based on a value of MPLS label received from label fetching section 115 to determine a forward destination of the packet.

Forwarding table 103 stores forwarding information associated with the MPLS label. More specifically, forwarding table 103 is a table that indicates the relationship between a pair of an input port and label information of MPLS of an input packet and a pair of an output port that is a forwarding destination of the packet and label information of MPLS to assign in outputting.

When the packet output from label fetching section 115 is output to a plurality (the number of forward destinations) of output ports, packet copy section 106 makes the plurality of copies to output to transmitting section 116.

Transmitting section 116 receives packets from packet copy section 106 to forward to forward destinations determined in table check section 104.

By thus constructing a cable network upstream from the base stations 108 and 109 using MPLS network 100, it is possible to assure radio communication terminals of QoS.

When radio communication terminal 107 intends to move from zone 111 covered by existing zone base station 108 currently communicating with radio communication terminal 107 to zone 112 covered by adjacent peripheral zone base station 109 and enters diversity area 110, relay apparatus 101 of the present invention provides paths (LSP) of MPLS to two base stations 108 and 109, copies the packet to radio communication terminal 107, and forwards the packet to both the two base stations 108 and 109. It is thus intended to eliminate the packet loss in handover.

However, the protocol in MPLS does not have the working to forward a packet to two LSPs. Therefore, relay apparatus 101 of the present invention changes forwarding table 103 of MPLS from conventional one, and thus enables packets to be forwarded to both the two base stations 108 and 109.

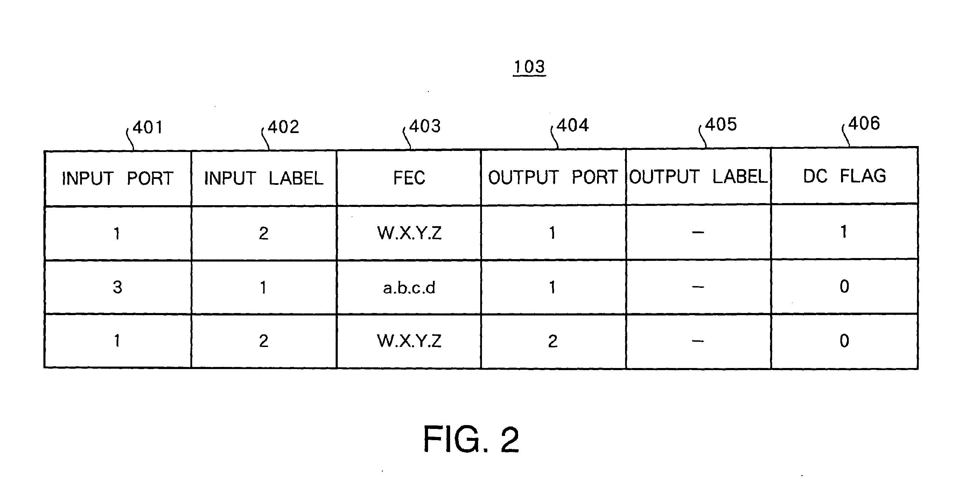

Referring to FIG.2, forwarding table 103 will be described specifically that is one of features of the present invention. FIG.2 is a view showing an example of forwarding table 103.

Forwarding table 103 stores items of input port 401 indicative of a port number through which an arriving packet is input, input label 402 indicative of an MPLS label of the arriving packet, FEC 403 indicative of a destination address and class of the packet, output port 404 indicative of a number of a port to forward the arriving packet, output label 405 indicative of an MPLS label to assign in forwarding the arriving packet, and DC flag 406 indicative of whether there is another output destination for radio communication terminal 107 that is a transmission destination of the arriving packet with the items associated with one another.

DC flag 406 takes a value of "1" or "0" when radio communication terminal 107 is present in diversity area 110, while only taking a value of "0" when the terminal 107 is not present in diversity area 110.

In output port 404, "1" indicates a port connected to peripheral zone base station 109, while "2" indicates a port connected to existing zone base station 108.

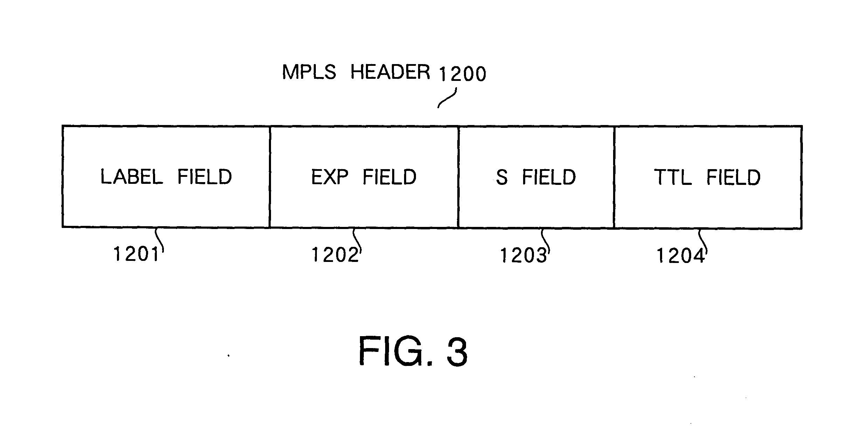

A configuration of an MPLS header will be described below with reference to FIG.3. MPLS header 1200 is comprised of four fields, label field 1201, EXP field 1202, S field 1203 and TTL field 1204.

Label field 1201 is a field to store a value of MPLS label.

EXP filed 1202 is a field reserved for experiment.

S field 1203 is a field to indicate whether the label is positioned at the end of a label stack when a plurality of labels overlaps in a label stack structure. The label is positioned at the end of the label stack when the value is "1", while being positioned at a portion except the end of the label stack.

TTL filed 1204 is a field in which is stored a value indicative of existing time of a packet.

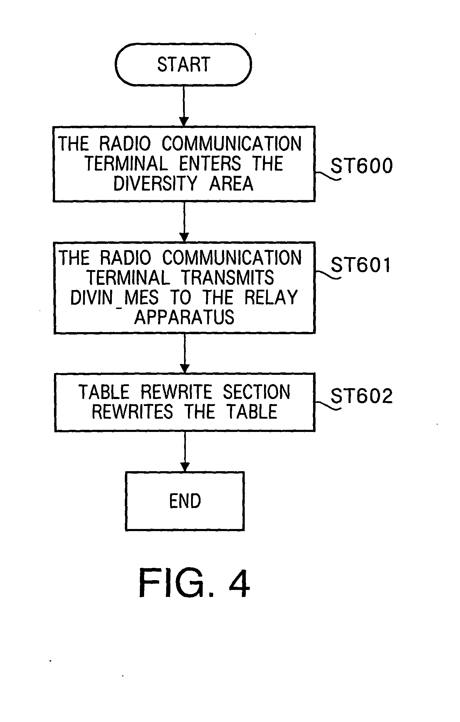

Referring to FIG.4, the operation will be described below for rewriting forwarding table 103 in relay apparatus 101 when radio communication terminal 107 enters the diversity area. FIG.4 is a flowchart to explain the table rewrite operation in relay apparatus 101 when radio communication terminal 107 enters diversity area 110.

When radio communication terminal 107 enters diversity area 110 (step 600) , the terminal 107 transmits to relay apparatus 101 DIVIN_MES including information indicating that the terminal 107 has entered diversity area 110, and further indicating base stations that cover diversity area 110 in which the terminal 107 is present, i.e. existing zone base station 108 and peripheral zone base station 109 (step 601).

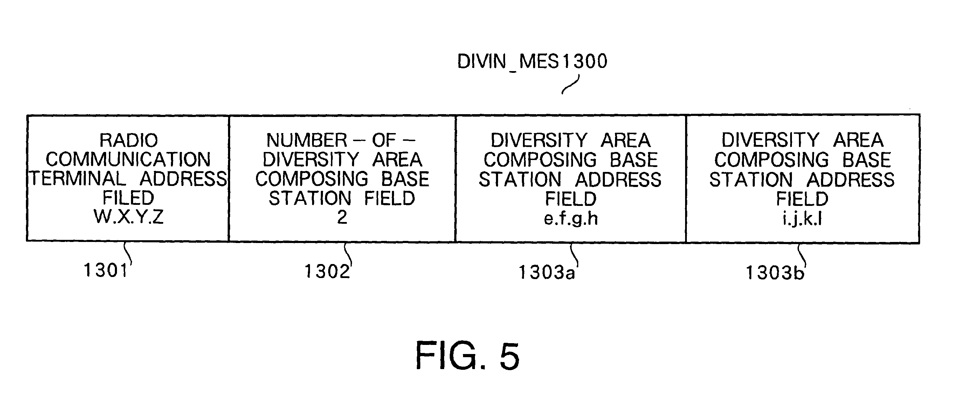

FIG.5 illustrates a configuration of DIVIN_MES. DIVIN_MES 1300 is comprised of radio communication terminal address field 1301, number-of-diversity area composing base station field 1302, and diversity area composing base station address fields 1303.

Radio communication terminal address field 1301 is a field to store an address of the radio communication terminal and a class to which the terminal belongs.

Number-of-diversity area composing base station field 1302 is a field to store the number of base stations that compose the diversity area where the radio communication terminal exists.

Diversity area composing base station address fields 1303 are fields to store addresses of the base stations compose the diversity area.

The number of diversity area composing base station address fields 1300 corresponds to the number stored in number-of-diversity area composing base station field 1302. In the example of FIG.5, since "2" is stored in number-of-diversity area composing base station field 1302, there are two diversity area composing base station address fields, 1300a and 1300b.

Determination on whether a packet is DIVIN_MES 1300 may be made by assigning a specific number to EXP filed 1202 in the MPLS header to determine or extending a new filed. In other words, it is only required to enable DIVIN_MES 1300 to be identified.

In the first embodiment, radio communication terminal address field 1300 stores an address, "W.X.Y.Z", of radio communication terminal 107. In this embodiment, since base stations composing diversity area 110 are existing zone base station 108 and peripheral zone base station 109, "2" is stored in number-of-diversity area composing base station field 1302. Diversity area composing base station address fields 1303 have a field in which is input an address, "e.f.g.h", of existing zone base station 108 and subsequent to the field, another field in which is input an address, "i.j.k.l", of peripheral zone base station 109.

In response thereto, relay apparatus 101 receives DIVIN_MES in table rewrite section 105 and recognizes that radio communication terminal 107 has entered diversity area 110. Then, table rewrite section 105 rewrites forwarding table 103 based on the base station information in DIVIN_MES (step 602).

Thus, using DIVIN_MES transmitted from radio communication terminal 107, table rewrite section 105 recognizes that radio communication terminal 107 has entered diversity area 110 and that the base stations 108 and 109 compose diversity area 110.

In addition, the first embodiment provides an aspect
where radio communication terminal 107 transmits DIVIN_MES, whereby table rewrite section 105 recognizes that the terminal 107 has entered diversity area 110, and another aspect may be provided. For example, a server may be provided which manages the position of radio communication terminal 107 and transmits information indicating that radio communication terminal 107 has entered diversity area 110 to relay apparatus 101.

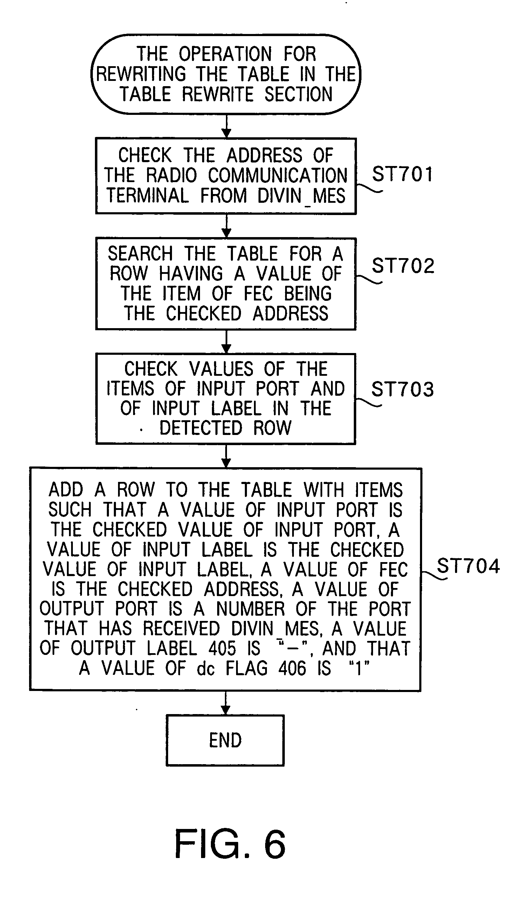

Referring to FIG.6, the operation will be described below specifically for rewriting forwarding table 103 in table rewrite section 105 (step 602). FIG.6 is a flowchart to explain the table rewrite operation in table rewriting section 105 when radio communication terminal 107 enters diversity area 110.

First, table rewrite section 105 checks the address of radio communication terminal 107 and the class to which the radio communication terminal belongs to from DIVIN_MES (step 701).

Table rewrite section 105 searches for a row having a value of the item of FEC 403 being the address checked in step 701 (step 702).

Table rewrite section 105 checks a value of the item of input port 401 and a value of the item of input label 402 in the row detected in step 702 (step 703).

Table rewrite section 105 inserts a new row to the top in forwarding table 103. In each item of the inserted new row, a value of input port 401 is the value of input port 401 checked in step 703, a value of input label 402 is the value of input label 402 checked in step 703, a value of FEC 403 is the address or class of the radio communication terminal checked in step 701, a value of output port 404 is a number of the port that has received DIVIN_MES, a value of output label 405 is "-", and a value of DC flag 406 is "1" (step 704).

A specific example of table rewrite processing in table rewrite section 105 will be described below with reference to FIGs.2 to 7.

Table rewrite section 105 checks the address of radio communication terminal 107 from the content of DIVIN_MES and obtains information of "W.X.Y.Z" (step 701).

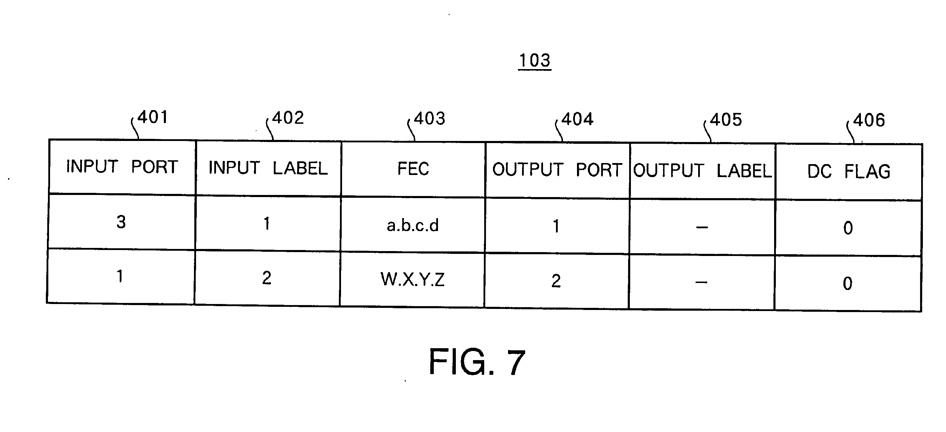

Table rewrite section 105 detects a second row such that a value of the item of FEC 403 is "W.X.Y.Z" (step 702) from forwarding table as shown in FIG.7 (step 702).

Table rewrite section 105 checks a value of "1" in the item of input port 401 and a value of "2" in the item of input label 402 (step 703) in the second row in the table as shown in FIG.7 (step 703).

Finally, table rewrite section 105 adds a row such that a value of the item of input port 401 is "1", a value of the item of input label 402 is "2", a value of FEC 403 is "W.X.Y.Z", a value of the item of output label 405 is "-", and that a value of the item of DC flag 406 is "1" to the top of forwarding table 103 as shown in FIG.7, and generates forwarding table 103 as shown in FIG.2 (step 704).

Thus, when radio communication terminal 107 enters diversity area 110, forwarding table 103 is rewritten, and it is thereby possible to set a plurality of pairs of output ports and output labels with respect to a single pair of an input port and input label, and to expand paths of MPLS to a plurality of base stations (herein, two base stations, 108 and 109). As a result, the relay apparatus is capable of forwarding packets to all of the plurality of base stations (herein, two base stations, 108 and 109), and of preventing the packet loss.

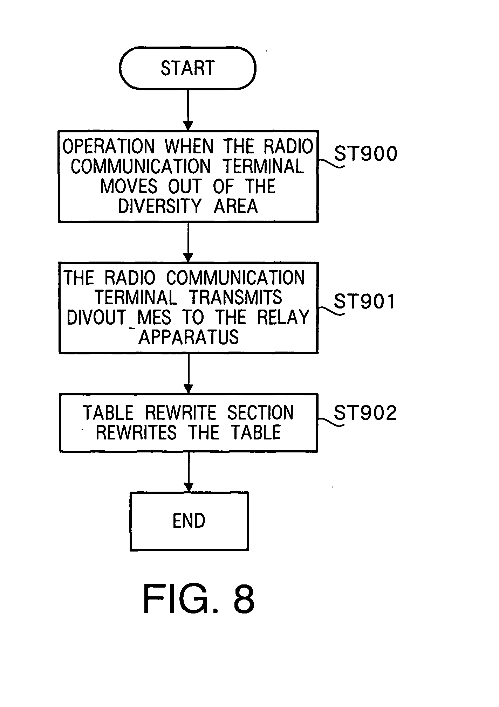

The operation will be described below when radio communication terminal 107 moves out of the diversity area with reference to FIG.8. FIG.8 is a flowchart to explain the table rewrite operation in relay apparatus 101 when radio communication terminal 107 moves out of diversity area 110.

When radio communication terminal 107 moves out of diversity area 110 (step 900), the terminal 107 transmits to relay apparatus 101 DIVOUT_MES including information indicating that the terminal 107 has moved out of diversity area 110, and further indicating a base station with which the terminal is currently communicating, i.e. peripheral zone base station 109 (step 901).

In response thereto, table rewrite section 105 recognizes that radio communication terminal 107 has moved out of diversity area 110 from the content of DIVOUT_MES. Then, table rewrite section 105 rewrites forwarding table 103 based on the base station information in DIVOUT_MES (step 902).

Thus, by receiving DIVOUT_MES transmitted from radio communication terminal 107, table rewrite section 105 recognizes that radio communication terminal 107 has moved out of diversity area 110 and is currently communicating with the base station 109.

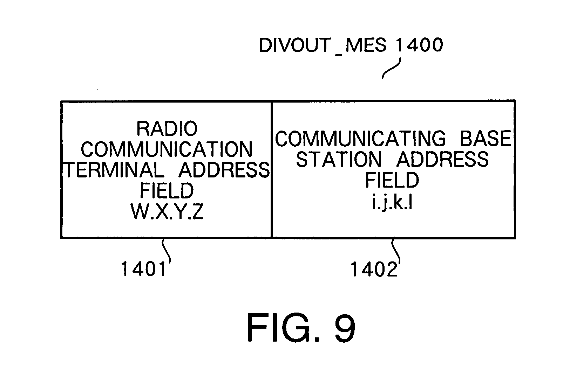

FIG.9 illustrates a configuration of DIVOUT_MES. DIVOUT_MES 1400 is comprised of radio communication terminal address field 1401 and communicating base station address field 1402.

Radio communication terminal address field 1401 is a field to store an address of the radio communication terminal and a class to which the terminal belongs.

Communicating base station address field 1402 is a filed to store an address of a base station with which radio communication terminal 107 is currently communicating.

Determination on whether a packet is DIVOUT_MES 1400 may be made by assigning a specific number to EXP filed 1202 in the MPLS header to determine or extending a new filed. In other words, it is only required to enable DIVOUT_MES 1400 to be identified.

In the first embodiment, radio communication terminal address field 1401 stores the address, "W.X.Y.Z", of radio communication terminal 107. In this embodiment, since the base station with which radio communication terminal 107 is currently communicating is peripheral zone base station 109, the field 1401 is followed by a field having the address, "i.j.k.l", of the peripheral zone base station 109.

In addition, the first embodiment provides an aspect where radio communication terminal 107 transmits DIVOUT_MES, whereby table rewrite section 105 recognizes that the terminal 107 has moved out of diversity area 110, and another aspect may be provided. For example, a server may be provided which manages the position of radio communication terminal 107 and transmits information indicating that radio communication terminal 107 has moved out of diversity area 110 to relay apparatus 101.

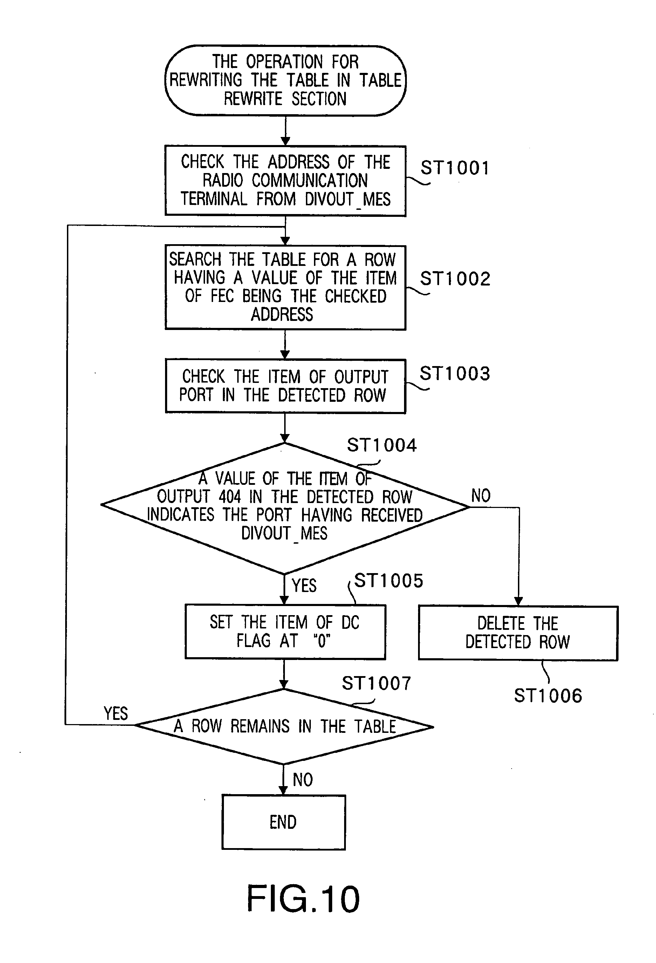

Referring to FIG.10, the operation (step 902) will be described below specifically for rewriting forwarding table 103 in table rewrite section 105.

First, table rewrite section 105 checks the address of radio communication terminal 107 from DIVOUT_MES transmitted from the terminal 107 (step 1001).

Table rewrite section 105 searches forwarding table 103 for a row having a value of the item of FEC 403 being the address checked in step 1001 (step 1002).

Table rewrite section 105 checks a value of the item of output port 404 in the row detected in step 1002 (step 1003).

Table rewrite section 105 checks whether a value of the item of output 404 in the row detected in step 1002 indicates the port that has received DIVOUT_MES (step 1004).

When the value of the item of output port 404 in the row detected in step 1002 is the same as the value of the port having received DIVOUT_MES, the row detected in step 1002 is a row to forward to a port connected with the base station currently communicating with radio communication terminal 107, and needs to be left. Therefore, in this case, table rewrite section 105 checks the item of DC flag 406 in the row detected in step 1002, and when DC flag 406 is "1", changes to "0" (step 1005).

Meanwhile, when the value of the item of output port 404 in the row detected in step 1002 is different from the number of the port having received DIVOUT_MES, the row detected in step 1002 is a row to forward to a base station different from the base station currently communicating with radio communication terminal 107. Therefore, table rewrite section 105 deletes the row detected in step 1002 (step 1006).

Then, table rewrite section 105 continues the operations of steps 1003 and 1004, and of step 1005 or 1006 until the last row of forwarding table 103 (step 1007).

A specific example of the table rewrite processing in table rewrite section 105 will be described below with reference to FIGs.2, 8 and 10.

Table rewrite section 105 checks the address of radio communication terminal 107 from DIVOUT_MES transmitted from radio communication terminal 107 and obtains information of "W.X.Y.Z" (step 1001).

Table rewrite section 105 detects a first row in forwarding table 103 as shown in FIG.2, as a row such that a value of the item of FEC 403 is "W.X.Y.Z", from forwarding table 103 (step 1002).

Table rewrite section 105 checks the value of "1" in the item of output port 404 in the first row in forwarding table 103 as shown in FIG.2 (step 1003).

In this case, the port having received DIVOUT_MES is "1", and so, the value indicates the same port as the output port having received DIVOUT_MES (step 1004). Therefore, table rewrite section 105 checks the item of DC flag 406, changes the value to "0", and leaves the row (step 1005).

Next, table rewrite section 105 detects a third row with the value of the item of FEC 403 being "W.X.Y.Z" as shown in FIG. 2 from remaining rows in forwarding table 103 (step 1002).

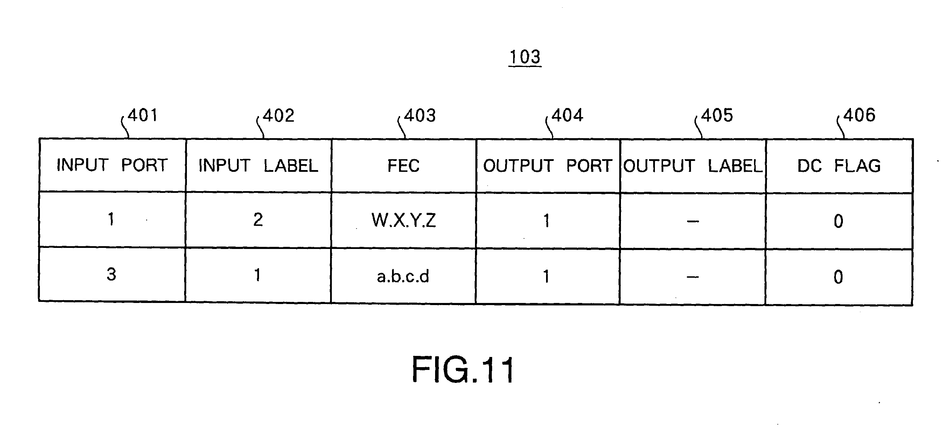

Table rewrite section 105 checks the value of "2" in the item of output port 404 in the third row in forwarding table 103 as shown in FIG.2 (step 1003). The port having received DIVOUT_MES is "1", which is different from the value in the item of the output port 404 in the third row in forwarding table 103 as shown in Table 2, and therefore, table rewrite section 105 deletes the third row and obtains forwarding table 103 as shown in FIG.11 (step 1006).

Thus, by rewriting forwarding table 103, when radio communication terminal 107 moves out of the diversity area and enters the zone of base station 109, relay apparatus 101 deletes a pair of the output port and output label corresponding to the base station 108 from which the terminal 107 moves, and thereby disconnects the path (LSP) to base station 108 from which the terminal 107 moves. As a result, it is possible to prevent increases in number in useless communication channel, and to prevent wasteful use in communication networks.

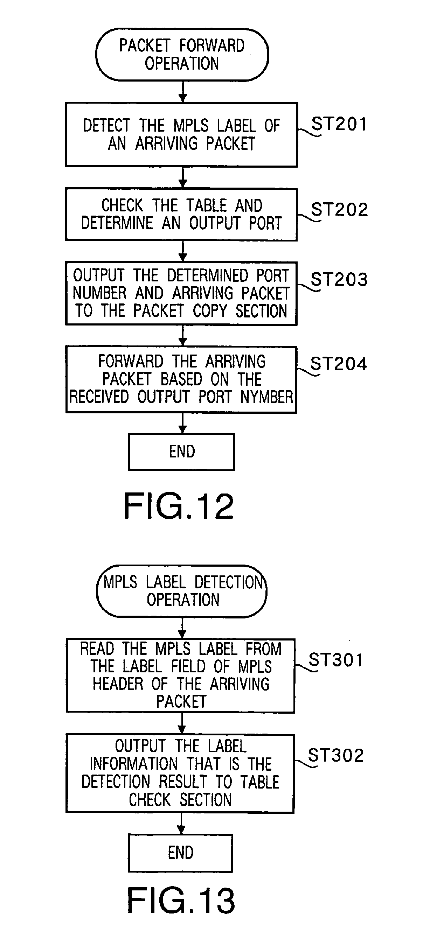

The packet forward operation will be described below when relay apparatus 101 receives packets except the message packet. FIG.12 is a flowchart to explain the packet forward operation in relay apparatus 101.

In relay apparatus 101, receiving section 113 receives a packet to radio communication terminal 107, message data fetching section 114 checks whether the received packet is a message packet (herein, the packet is not a message packet), and label fetching section 115 detects an MPLS label of the received packet (step 201).

In relay apparatus 101, table check section 104 checks forwarding table 103 and determines an output port (step 202).

Table check section 104 outputs the output port number and output label determined in step 202 to packet copy section 106, and outputs the output port number to transmitting section 116 (step 203).

Packet copy section 106 makes a number of copies of the packet corresponding to the number of output ports, and replaces the MPS label with the output label acquired from table check section 104 to output to transmitting section 116. Then, based on the received output port numbers, the section 116 forwards arriving packets from packet copy section 106 to forward to the base stations 108 and 109 (step 204).

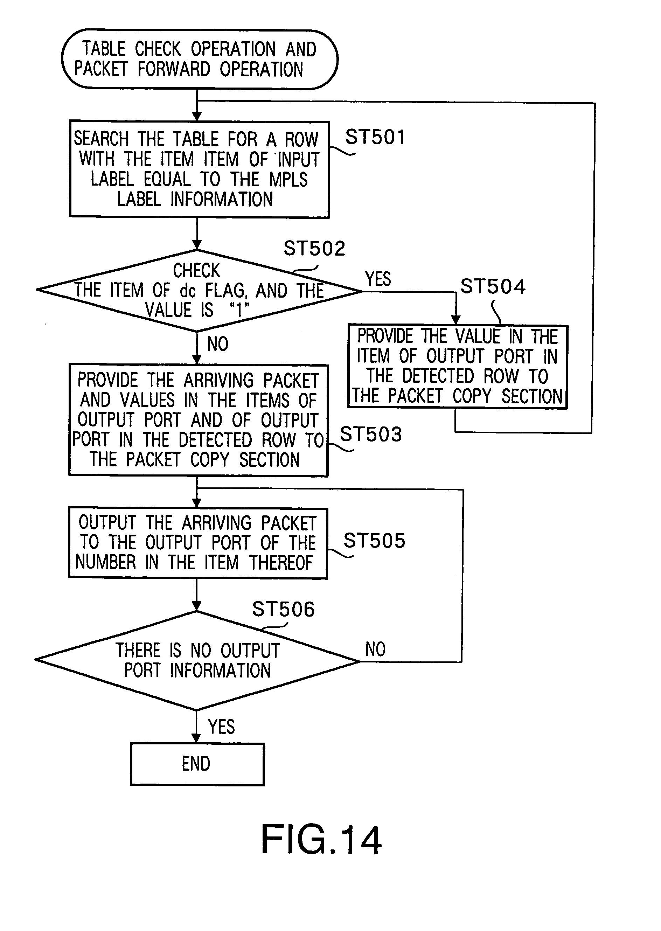

The packet forward operation in relay apparatus 101 will be described below with reference to FIGs.13 and 14. The label detecting operation in label fetching section 115 will be described first with reference to FIG.13. FIG.13 is a view to explain the operation (step 201) in label fetching section 115.

Label fetching section 115 reads the MPLS label of the arriving packet from the label field in the MPLS header of the arriving packet (step 301).

Label fetching section 115 outputs the MPLS label information that is a result detected in step 301 to table check section 104 (step 302).

In the example of the first embodiment, label fetching section 115 reads the value of "2" as the MPLS label from the MPLS header of the arriving packet. Then, the section 115 outputs the MPLS label information (the value of "2") which is the detection result to table check section 104, and further outputs the arriving packet to packet copy section 106.

The table check operation (steps 202 and 203) in table check section 104 and the packet forward operation (step 204) in packet copy section 106 and transmitting section 116 will be described below with reference to FIG.14. FIG.14 is a flowchart to explain the operations in packet check section 104, packet copy section 106 and transmitting section 116.

Table check section 104 searches forwarding table 103 for a row such that the item of input label 402 is equal to the MPLS label obtained from label fetching section 115, and that the item of input port is equal to the number of the port having received the packet (step 501) .

When table check section 104 detects from forwarding table 103 the row such that the item of input label is equal to the MPLS label obtained from label fetching section 115, and that the item of input port is equal to the number of the port having received the packet, the section 104 checks the item of DC flag 406 in the detected row (step 502).

When a value in the item of DC flag 406 checked in step 502 is "0", radio communication terminal 107 is not present in diversity area 110. Accordingly, in this case, table check section 104 provides to packet copy section 106 the value in the item of output port 404 in the row detected in step 501 and the value of output label 405 in this row (step 503).

Meanwhile, when a value in the item of DC flag 406 checked in step 502 is "1", radio communication terminal 107 is present in diversity area 110. In this case, the received arriving packet should be copied and forwarded to peripheral zone base station 109 too. Accordingly, in this case, table check section 104 provides to packet copy section 106 the value in the item of output port 404 in the row detected in step 501 and the value of output label 405 in this row, and shifts to the processing in step 501 for searching for information for forwarding to another base station (step 504).

Then, in order to obtain the output port connected with peripheral zone base station 109, table check section 104 searches remaining rows in forwarding table 103 for a row such that the item of input label is equal to the MPLS label obtained from label fetching section 115, and that the item of input port is equal to the number of the port having received the packet (step 501). When table check section 104 detects from the remaining rows in forwarding table 103 the row such that the item of input label 402 is equal to the MPLS label obtained from label fetching section 115, and that the item of input port is equal to the number of the port having received the packet, the section 104 checks the item of DC flag 406 in the detected row (step 502).

When a value in the item of DC flag 406 checked in step 502 is "1", there exists another peripheral zone base station that composes diversity area 110 where radio communication terminal 107 is present. Accordingly, in this case, table check section 104 provides to packet copy section 106 the value of the item of output port 404 in the row detected in step 501 and the value of output label 405 in this row (step 504). Then, in order to obtain the output port connected with the another peripheral zone base station composing diversity area 110 where radio communication terminal 107 is present, table check section 104 further searches the remaining rows in forwarding table 103 for a row such that the item of input label is equal to the MPLS label obtained from label fetching section 115, and that the item of input port is equal to the number of the port having received the packet (step 501).

Table check section 104 repeats the operations of steps 501, 502 and 504, until the item of DC flag 406 is "0" in the detected row.

When the item of DC flag 406 is "0", there is no other base station that composes diversity area 110 where radio communication terminal 107 is present. Accordingly, in this case, table check section 104 provides to packet copy section 106 the value of the item of output port 404 in the detected row and the value of the item of output label 405 in the detected row (step 503) .

In response thereto, packet copy section 106 makes copies of the arriving packet output from label fetching section 115, where the number of the copies corresponds to the number of output ports provided from table check section 104 minus 1. The section 106 replaces the MPLS label of the packet using the value of output label provided from table check section 104, and outputs the packet to transmitting section 116 together with the information of output port provided from table check section 104. Transmitting section 116 forwards the packet received from packet copy section 106 to an output port with the output port number received from packet copy section 106 (step 505).

Then, packet copy section 106 and transmitting section 116 repeat the operation of step 505 the number of times the same as the number of pieces of output information obtained from table check section 104 (step 506).

In the example in the first embodiment, table check section 104 checks items of input label 402 in ascending order in forwarding table 103, and detects a first row
where the input label is equal to MPLS label information "2" obtained from label fetching section 115, and the input port is equal to the number of the port (herein, assumed as "4") through which the packet is input (step 501).

Next, table check section 104 checks the item of DC flag 406 in the first row in forwarding table 103 as shown in Table 2 (step 502). In the first embodiment, since the item of DC flag 406 in the first row has "1", radio communication terminal 107 is present in diversity area 110. Accordingly, table check section 104 provides to packet copy section 106 the value of "1" in the item of output port 404 and the value of "-" in the item of output label 405 in the first row in forwarding table 103 as shown in FIG.2 (step 504).

Table check section 104 searches forwarding table 103 as shown in FIG.2 for a row such that a value of input port 401 is "4" and a value in the item of input label 402 is "2", in ascending order starting with the second row (step 501). Then, the section 104 detects a third row where the value of the item of input port 401 is "4" and the value of the item of input label 402 is "2" in forwarding table 103 as shown in FIG.2.

Since the value of the item of DC flag is "0" in the third row in forwarding table 103 as shown in FIG.2, table check section determines that there is no other base station that composes diversity area 110, and provides to packet copy section 106 the value of "2" in the item of output port 404 and the value of "-" in the item of output label 405 in the third row in forwarding table 103 as shown in FIG.2 (503).

In response thereto, based on the output port information "1" and output label information "-" ("-" means removing the MPLS header) obtained from table check section 104, packet copy section 106 forwards data of the arriving packet output from label fetching section 115 to the output port of number 1 connected with existing zone base station 108 (step 505).

Further, since packet copy section 106 receives another output port information, "2", (step 504), the section 106 forwards the arriving packet to the output port of number 2 connected with peripheral zone base station 109, based on the output port information "2" and output label information "-" (step 505).

As described above, according to the first embodiment, it is possible to set a single input label 402 for a plurality of output ports 404 in forwarding table 103. It is therebypossible to construct multi-path in the system where a portion upstream from the base stations 108 and 109 is constructed in MPLS network 100. As a result, it is possible not only to provide QoS assurance to radio communication terminal 107 using MPLS, but also to eliminate the packet loss due to handover.

Further, according to the first embodiment, when radio communication terminal 107 enters diversity area 101, forwarding table 103 associates a pair of input port 401 and input label (MPLS label) 402 of the received packet with output ports 404 that are forward information of a plurality of base stations, 108 and 109, composing diversity area 110. In this way, when radio communication terminal 107 enters diversity area 110 and performs handover, it is possible to expand paths to the plurality of base stations, 108 and 109. Moreover, the path is expanded when radio base station terminal 107 performs handover, and then disconnected when the terminal moves out of the diversity area, thus enabling the effective use of communication network. Accordingly, it is possible to provide QoS assurance to radio communication terminal 107 while using the communication network efficiently, and further to prevent the packet loss in handover.

Furthermore, according to the first embodiment, when radio communication terminal 107 moves out of diversity area 110, it is possible to associate in forwarding table 103 a pair of input port 401 and input label (MPLS label) 402 of the received packet only with the forward information of the base station 109 communicating with radio communication terminal 107. As a result, it is possible to expand the path only to the base station 109 with which radio communication terminal 107 is currently communicating to enable packets to be forwarded. Accordingly, the need is eliminated of expanding an unnecessary path, and it is thereby possible to prevent the packet loss while using the communication network efficiently.

Moreover, in the first embodiment, forwarding table 103 has a configuration where DC flag 406 is added to a basic table of MPLS, i.e., an extended configuration, and is the same as the general table of MPLS except DC flag 406, and therefore, it is possible to apply relay apparatus 101 to a general MPLS network.

### (Second embodiment)

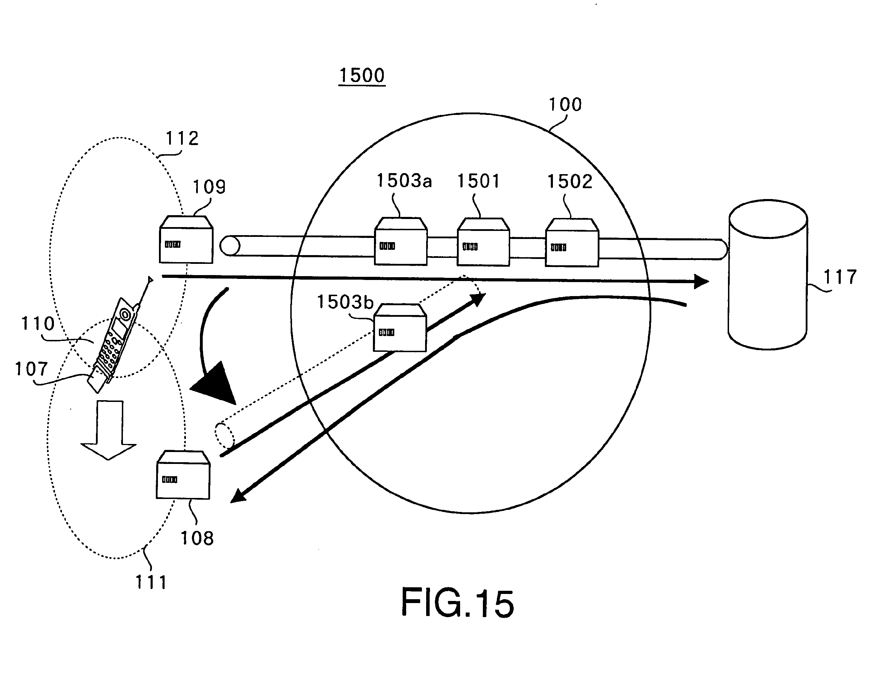

The outline of a communication system according to the second embodiment of the present invention will be describedwith reference to FIG.15. In addition, the same sections as those already described are assigned the same reference numerals.

In the first embodiment, relay apparatus 101, positioned at the end portion on the radio communication terminal 107 side on MPLS network 100, forwards packets to both two base stations, 108 and 109. In contrast thereto, in communication system 1500 according to the second embodiment, a relay apparatus positioned in the middle of MPLS network 100 performs control for forwarding packets to both of the two base stations, 108 and 109. It is assumed that "1501" denotes the relay apparatus of the present invention, and that "1502" and "1503" denote relay apparatuses with generation MPLS functions.

When radio communication terminal 107 enters diversity area 110, the terminal 107 transmits DIVIN_MES to server 117.

When DIVIN_MES is passed through the relay apparatus of the present invention inside MPLS network 100 while being forwarded from radio communication terminal 107 to server 117, the relay apparatus of the present invention receives DIVIN_MES to store. In the section embodiment, relay apparatus 1503a in MPLS network 100 receives DIVIN_MES to transmit to relay apparatus 1500 positioned in the middle of MPLS 100. Then, relay apparatus 1500 that is the relay apparatus of the present invention receives and stores DIVIN_MES.

Since radio communication terminal 107 enters the diversity area, LSP is formed from server 117 to radio communication terminal 107 via base station 108. At this point, when two LSPs are extended, relay apparatus 1501 rewrites the table so that forward destinations of packets respectively correspond to the two LSPs, and floods packets transmitted from server 117 via relay apparatus 1502, i.e., forwards the packets, to both the two base stations 108 and 109 composing diversity area 110 until DIVOUT_MES arrives at the relay apparatus 1501.

Radio communication terminal 107 transmits DIVOUT_MES in moving out of diversity area 110, and when relay apparatus 1501 receives DIVOUT_MES, flooding is finished.

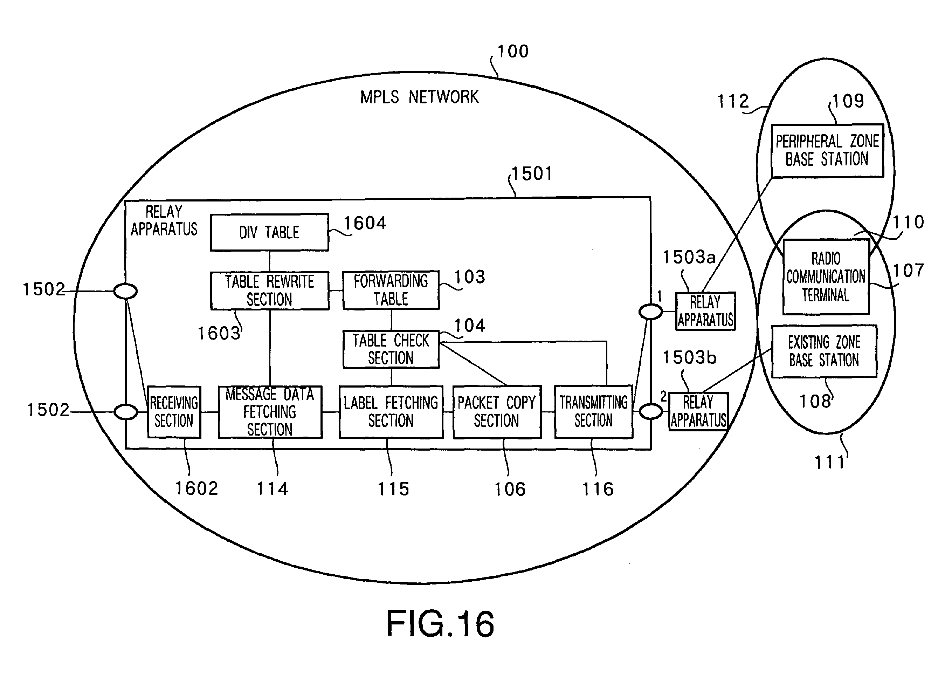

As described above, relay apparatus 1501 positioned in the middle of MPLS network 100 performs control for forwarding packets to both of the two base stations, 108 and 109, corresponding to the position of radio communication terminal 107. A configuration of relay apparatus 1501 according to the second embodiment will be described below with reference to FIG. 16. In addition, the same sections as those already described are assigned the same reference numerals.

Relay apparatus 1501 is provided with receiving section 1602. Receiving section 1602 receives a packet to output to message data fetching section 114. In addition, the number of relay apparatuses 1502 may be one or more. Further, receiving section 1602 may receive a packet directly from server 117.

According to the type and content of a message received from message data fetching section 114, table rewrite section 1063 rewrites DIV table 1604 and forwarding table 103.

DIV table 1604 is a table to store forward information on radio communication terminal 107 existing in diversity area 110. By referring to DIV table 1604, table rewrite section 1603 is capable of recognizing that radio communication terminal 107 is present in diversity area 110 and further recognizing the forward information on radio communication terminal 107.

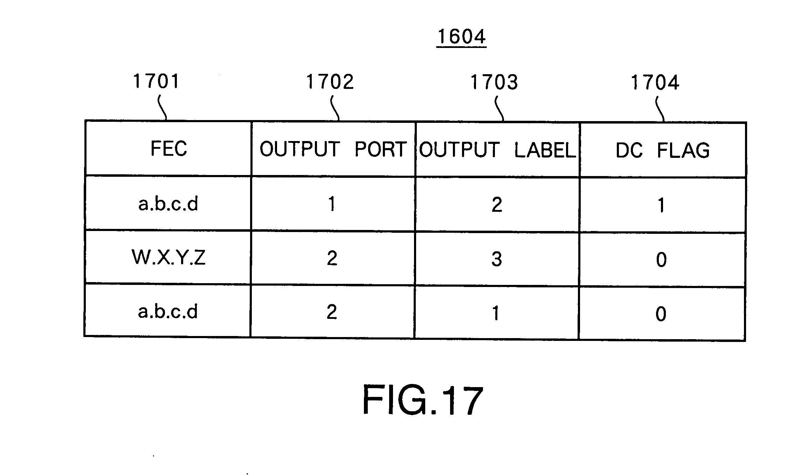

A configuration of DIV table 1604 will be described below with reference to FIG.17.

DIV table 1604 stores items of FEC 1701 indicative of a destination address and class of the packet, output port 1702 indicative of a number of a port to forward the arriving packet, output label 1703 indicative of an MPLS label set in forwarding the arriving packet, and DC flag 1704 indicative of whether there is another output destination for radio communication terminal 107 that is a transmission destination of the arriving packet with the items associated with one another.

DC flag 1704 takes a value of "1" or "0" when radio communication terminal 107 is present in diversity area 110, while only taking a value of "0" when the terminal 107 is not present in diversity area 110.

In output port 1702, "1" indicates a port connected to peripheral zone base station 109, while "2" indicates a port connected to existing zone base station 108.

Relay apparatus 1501 according to the second embodiment is thus configured.

The operation in relay apparatus 1501 will be described below specifically.

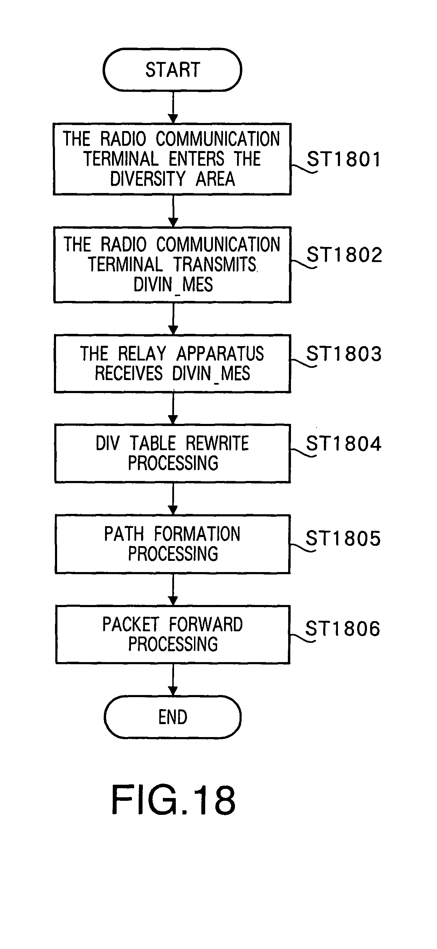

First, the operation in relay apparatus 1501 when radio communication terminal 107 enters diversity area 110 will be described with reference to FIG.18.

When radio communication terminal 107 enters diversity area 110 (ST1801), the terminal 107 transmits a message of location update to server 117 together with DIVIN_MES (ST1802).

When DIVIN_MES is passed through relay apparatus 1501 while being provided from radio communication apparatus 107 to server 117 that is a communicating party, relay apparatus 1501 receives DIVIN_MES in receiving section 1602 (ST1803). Then, according to the content of DIVIN_MES, relay apparatus 1501 rewrites DIV table 1604 (ST1804). In addition, the processing for rewriting DIV table 1604 will be described specifically later.

When the path is formed to base station 109 via relay apparatus 1501, the apparatus 1501 performs processing for forming the path (ST1805). In addition, the processing will be described later specifically for forming the path in relay apparatus 1501.

Then, when relay apparatus 1501 receives a packet to radio communication terminal 107, the apparatus 1501 forwards the packet to radio communication terminal 107 using forwarding table 103 (ST1806). In addition, the packet forward processing in ST1806 will be described specifically later.

The outline of the operation in relay apparatus 1501 is described above when radio communication terminal 107 enters diversity area 110.

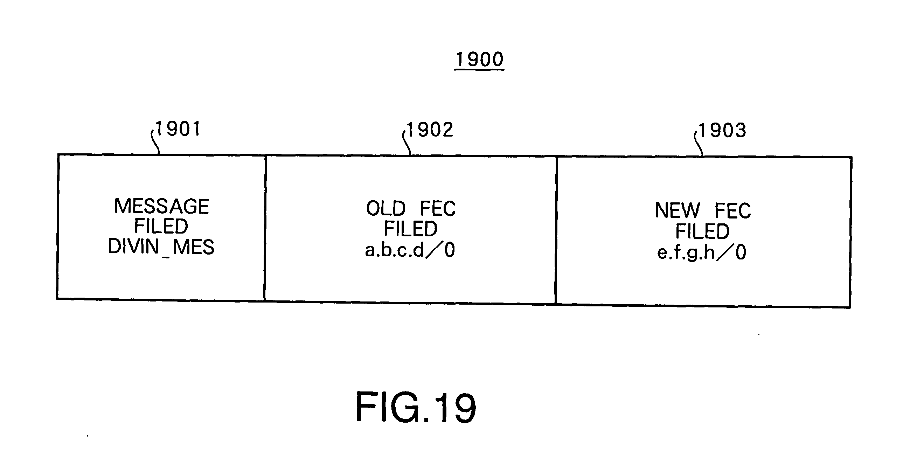

Referring to FIG.19, DIVIN_MES will be described below that relay apparatus 1501 receives from radio communication apparatus 107.

DIVIN_MES 1900 is comprised of message field 1901, old FEC field 1902, and new FEC field 1903.

Message field 1901 is a field to describe the type of a message. The message field is to determine whether a packet is of message, and when the packet is of message, further determine the type of the message. In addition, determination on a packet may be made by assigning a specific number to EXP filed 1202 in the MPLS header, instead of providing message field 1901. In other words, it is only required to enable DIVIN_MES 1900 to be identified.

Old FEC field 1902 is a field to store an address of abase station with which a radio communication terminal having entering diversity area 110 has communicated previously.

New FEC field 1903 is a field to store an address of a base station composing a field that radio communication terminal 107 having entered diversity area 110 enters this time.

As described above, DIVIN_MES 1900 includes information for recognizing the base station composing the diversity area that radio communication terminal 107 has entered. In addition, while in the example in FIG.19, DIVIN_MES has two FEC fields, DIVIN_MES has three or more FEC fields when a diversity area is composed of zones of three or more base stations, respectively.

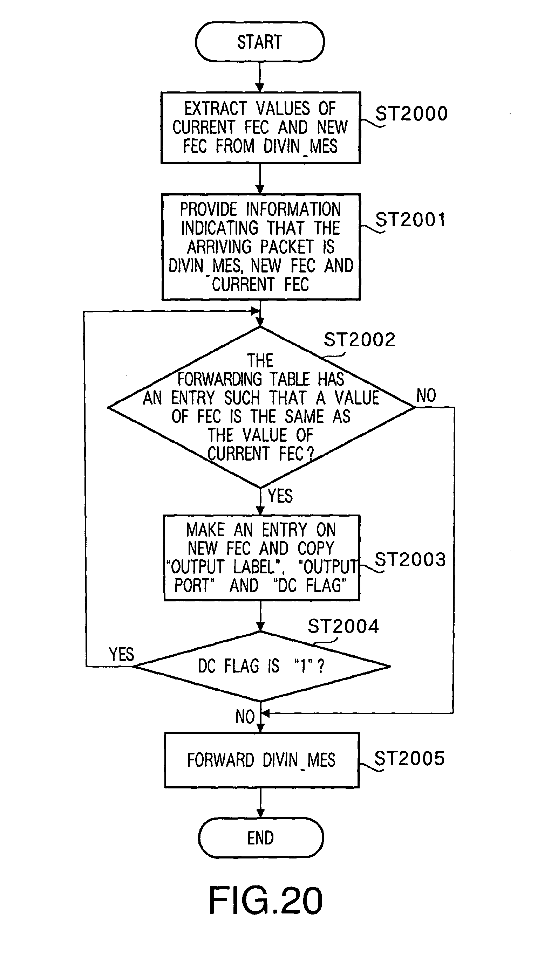

DIV table rewrite processing (ST1804) in relay apparatus 1501 will be described with reference to FIG.20.

Message data fetching section 114 in relay apparatus 1501 fetches from DIVIN_MES 1900 a value of current FEC 1902 (on the base station A side) and a value of new FEC 1903 (on the base station B side) (ST2000). Then, message fetching section 114 provides information indicating that the arriving packet is DIVIN_MES, new FEC 1903 and current FEC 1902 to table rewrite section 1603 (ST2001).

Table rewrite section 1603 searches forwarding table 103 in order starting with the top for an entry such that a value of FEC 403 is the same as the value of current FEC(A) 1902 (ST2002).

When detecting the entry such that the value of FEC 403 is the same as the value of current FEC (A) 1902, table rewrite section 1603 newly makes an entry on new FEC(B) 1903 in DIV table 1604, and copies values of output label 404, output port 405 and DC flag 406 of the entry with the same value as that of current FEC(A) 1902 detected from forwarding table 103 to output label 1702, output port 1703 and DC flag 1704 in DIV table 1604, respectively (ST2003).

Next, table rewrite section 1603 determines whether the copied value of DC flag 1704 is "1" or "0" (ST2004) , and when DC flag 1704 is "0", forwards received DIVIN_MES to a next relay apparatus to finish the processing since an entry with current FEC (A) 1902 is not present any more in forwarding table 103 (ST2005).

Meanwhile, when DC flag 1704 is "1" in ST2004, since an entry with current FEC (A) 1902 is present in forwarding table 103, the section 1603 performs the processing of ST2002 to ST2004 until an entry with current FEC (A) 1902 is not present, i.e., DC flag 1704 is "0".

Thus, the information on current FEC 1902 stored in the table 103 is stored in DIV table 1604.

Further, when in ST2002, any entry with the same value of FEC 403 as that of current FEC(A) 1902 is not detected among entries stored in forwarding table 103, the section 1603 forwards received DIVIN_MES to a next relay apparatus, and finishes the processing (ST2005).

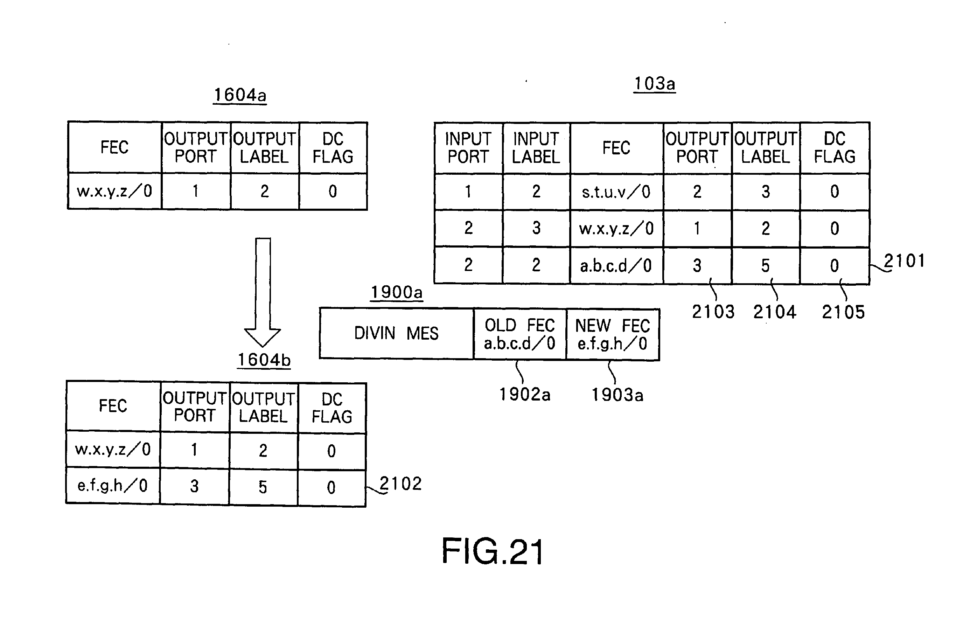

A specific example of the processing for rewriting DIV table 1604 in relay apparatus 1501 will be described below with reference to FIG.21.

It is assumed that relay apparatus 1501 has a DIV table as shown in 1604a and a table as shown in 103a, and in this sate, receives DIVIN_MES as shown in 1900a, in FIG.21.

In this case, message data fetching section 114 in relay apparatus 1501 fetches a value (a.b.c.d/0) of old FEC 1902a and a value (e.f.g.h/0) of new FEC 1903a from DIVIN_MES 1900a (ST2001).

Message data fetching section 114 provides information indicating that the arriving packet is DIVIN_MES, the value (e.f.g.h/0) of new FEC 1903a, and value (a.b.c.d/0) of old FEC 1902a to table rewrite section 1603.

Table rewrite section 1603 detects entry 2101 with the same value as the value (a.b.c.d/0) of old FEC 1902a in forwarding table 103a (ST2002).

Table rewrite section 1603 newly makes an entry on new FEC 1903a in DIV table 1604a, and copies values of output label 2104, output port 2103 and DC flag 2105 of entry 2101 with the same value as that of old FEC 1902a detected from forwarding table 103a to entry 2102 (ST2003). As a result, the DIV table is as shown in 1604b.

As described above, relay apparatus 1501 performs the processing for rewriting DIV table 1604, and thereby is capable of leaving in DIV table 1604 the forward information, i.e., the output label and output port, to communicate with the base station 108 in the existing zone where radio communication terminal 107 has existed since an earlier time.

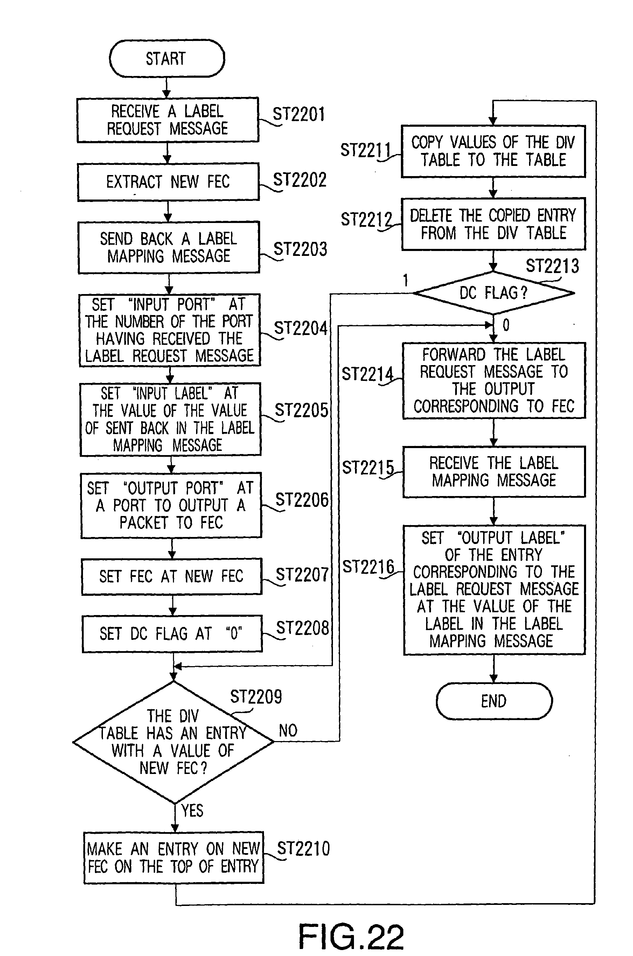

Path formation processing (ST1805) performed in relay apparatus 1501 will be described below specifically with reference to FIG.22.

Receiving section 1602 in relay apparatus 1501 receives a label request message that is a message to inquire a value of the MPLS label which should be assigned to a packet when relay apparatus 1502 transmits the packet to radio communication terminal 107 via the base station 109, from relay apparatus 1502 on the server 117 side (ST2201).

Message data fetching section 114 in relay apparatus 1501 fetches FEC (new FEC (FEC of peripheral zone base station 109)) included in the label request message, and provides the information that the arriving packet is a label request message and the value of new FEC to table rewrite section 1603 (ST2002).

According to a label distribution protocol, relay apparatus 1501 sends a label mapping message given a label of new FEC back to relay apparatus 1502 (ST2203).

Table rewrite section 1603 makes an entry such that input port 401 is set at the port that has received the label request message, input label 402 is set at the value of the label sent back in the label mapping message, output port 404 is set at an output port to output a packet to new FEC, FEC is set at new FEC, and that the DC flag is set at "0" (ST2204 to ST2208).

Table rewrite section 1603 searches DIV table 1604 for an entry such that a value of FEC is the same as the value of new FEC, in order starting with the top (ST2209).

When detecting the entry with the same value of FEC as the value of new FEC in DIV table 1604, table rewrite section 1603 makes an entry on the new FEC as the top entry in forwarding table 103 (ST2110), and copies values of output label 1702 and output port 1703 from DIV table 1604.

Then, table rewrite section 1603 performs setting such that the value of input port 401 indicates the port having received the label request message, the value of input label 402 is the value of the label in the label mapping message transmitted to relay apparatus 1502 in ST2103, and that DC flag 406 is "1" (ST2211).

By thus copying the output port and output label information corresponding to the path used earlier stored in DIV table 1604 to forwarding table 103, relay apparatus 1501 forms the path to existing zone base station 108.

Next, table rewrite section 1603 deletes the entry copied to forwarding table 103 from DIV table 1604 (ST2212).

When the value of DC flag in the deleted entry in DIV table 1604 is "1" (ST2213), since there is another entry on new FEC, the processing flow returns to ST2209, and table rewrite section 1603 performs the same processing on an entry left in DIV table 1604 and performs the processing of ST2209 to ST2213 until any entry on new FEC is not present (the value of DC flag in the deleted entry is "0").

Meanwhile, when the value of DC flag in the deleted entry in DIV table 1604 is "0", relay apparatus 1501 forwards the label request message to the output port corresponding to the new FEC (ST2214). Further, also when any entry is not detected with the same value of FEC as the value of new FEC in the DIV table in ST2209, table rewrite section shifts the processing to ST2214.

In relay apparatus 1501, receiving section 1602 receives the label mapping message transmitted from relay apparatus 1503a (ST2215), and message fetching section 114 fetches a value of the label in label mapping message to output to table rewrite section 1603.

Table rewrite section 1603 inputs the value of the label in the label mapping message to output label field 405 in the entry in forwarding table 103 made in receiving the label request message being processed (ST2216).

A specific example of the path formation processing (ST1805) in relay apparatus 1501 will be described below with reference to FIGs.22 to 24.

When receiving section 1602 receives a label request message including FEC "e.f.g.h" (ST2201), message data fetching section 114 fetches FEC "e.f.g.h" contained in the label request message, and provides the information that the arriving packet is a label request message and FEC "e.f.g.h" to table rewrite section 1603 (ST2002).

According to a label distribution protocol, relay apparatus 1501 sends a label mapping message back to relay apparatus 1502 (herein, it is assumed to send back "5" as the value of the label) (ST2203).

Table rewrite section 1603 makes an entry such that input port 401 is set at the port having received the label request message (in this example, "2"), input label 402 is set at the value of the label sent back in the label mapping message (in this example, "5"), output port 404 is set at an output port to output a packet to new FEC (in this example, "1"), FEC is set at new FEC (in this example, "e.f.g.h"), and that DC flag 406 is set at "0" (ST2204 to ST2208).

Table rewrite section 1603 searches DIV table 1604b for an entry such that a value of FEC is the same as the value of new FEC, in order starting with the top, and detects entry 2102 that is a second one from the top (ST2209).

Then, table rewrite section 1603 makes entry 2304 on the new FEC ("e.f.g.h/0") as the top entry in forwarding table 103b (ST2110), and copies a value 2302 (in this example, "3") of output label, and a value 2303 (in this example, "5") of output port from DIV table 1604b to the new entry.

Table rewrite section 1603 sets entry 2302 in forwarding table 103a for values such that the value of input port 401 is the number (in this example, "2") of the port having received the label request message, the value of input label 402 is the value (in this example, "5") of the label in the label mapping message sent back in ST2203, and that DC flag 406 is "1" (ST2211).

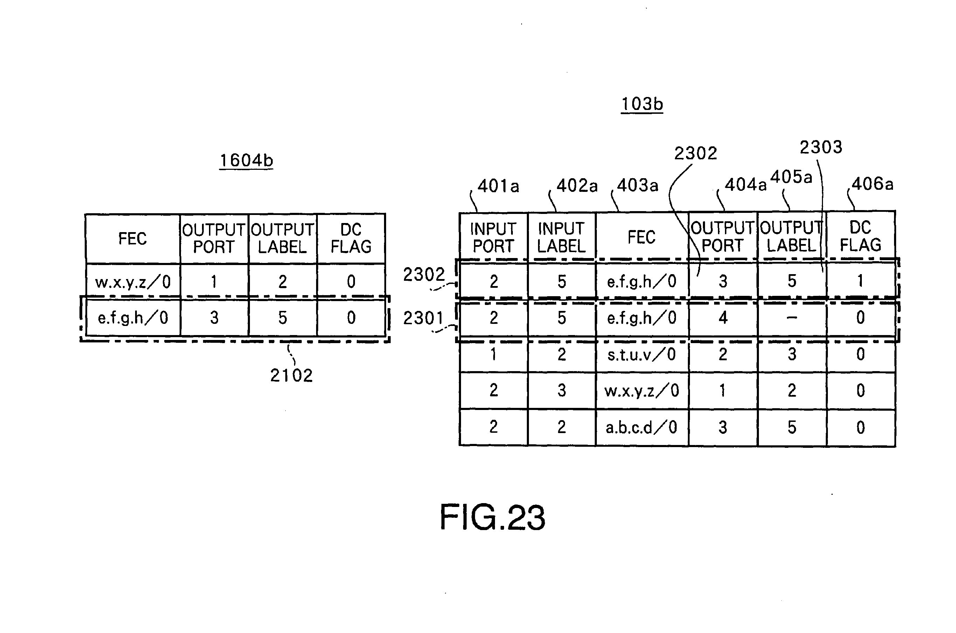

Thus, the table is in a state as shown in 103b in FIG.23.

Next, table rewrite section 1603 deletes entry 2102 copied to forwarding table 103b from DIV table 1604b to set the DIV table for the state as shown in 1604c (ST2212).

Relay apparatus 1501 forwards the label request message to the output port (in this example, "4") corresponding to FEC (e.f.g.h) (ST2214). Then, in relay apparatus 1501, receiving section 1602 receives the label mapping message transmitted from relay apparatus 1503a (ST2215) , and table rewrite section 1603 inputs the value (in this example, "8") of label 2401 in the label mapping message to output label field 405a in the entry in forwarding table 103b made in receiving the label request message.

As a result, the table is in a state as shown in 103c.

As described above, relay apparatus 1501 communicates a label request message and label mapping message with relay apparatus 1502 upstream from the apparatus 1501 and with relay apparatus 1503 downstream from the apparatus 1501, thereby acquires the label information, and rewrites forwarding table 103 so as to form the path to peripheral zone base station 109.

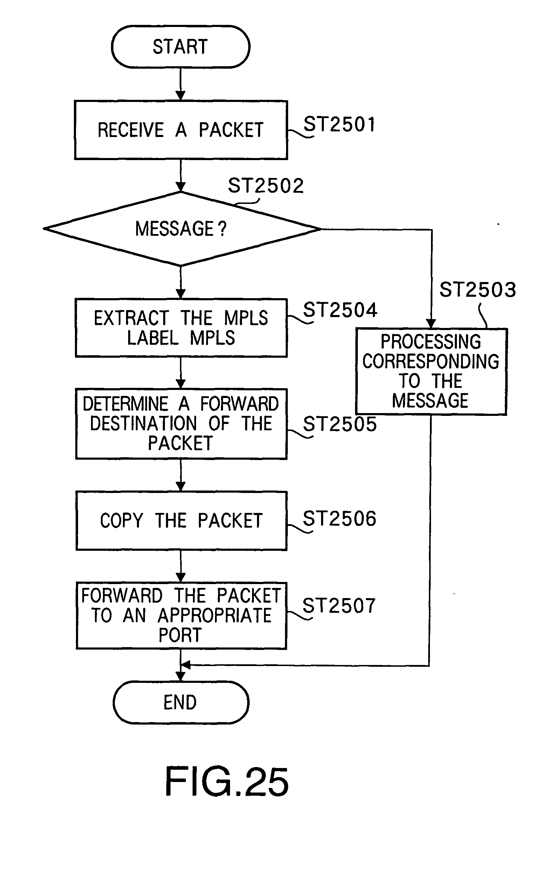

The packet forward processing (ST1806) in relay apparatus 1501 will be described below with reference to FIG.25.

Receiving section 1602 receives a packet (ST2501), and outputs the received packet to message fetching section 114.

Message data fetching section 114 checks whether the receivedpacket is of message to perform any processing, i.e., DIVIN_MES, DIVOUT_MES, label request message or label mapping message (ST2502).

When the received packet is a message packet, message data fetching section 114 provides the type and content of the message to table rewrite section 1603. Table rewrite section 1603 performs the processing corresponding to the message, for example, the processing of ST1804 and ST1805 (ST2503).

Meanwhile, when the received packet is a packet other than the message packet, message data fetching section 114 outputs the received packet to label fetching section 115.

Label fetching section 115 extracts an MPLS label from the received packet (ST2504) to provide to table check section 104. Further, the section 115 outputs the received packet to packet copy section 106.

Table check section 104 determines a packet forward destination from the MPLS label received from label fetching section 115, the input port number and forwarding table 103 (ST2505).

When there is a plurality of forward destinations, table check section 104 outputs a packet copy instruction to packet copy section 106.

According to the instruction from table check section 115, packet copy section 106 copies the packet when necessary (ST2506). Packet copy section 106 outputs the received copy and (if copied) copied packets to transmitting section 116.

According to an instruction from table check section 104, transmitting section 116 outputs the packet to an appropriate output port (ST2507).

As described above, relay apparatus 1501 forwards a received packet to a predetermined destination according to forwarding table 103. Accordingly, when a plurality of destinations of a received packet is recorded in forwarding table 103, the received packet is forwarded to a plurality of destinations.

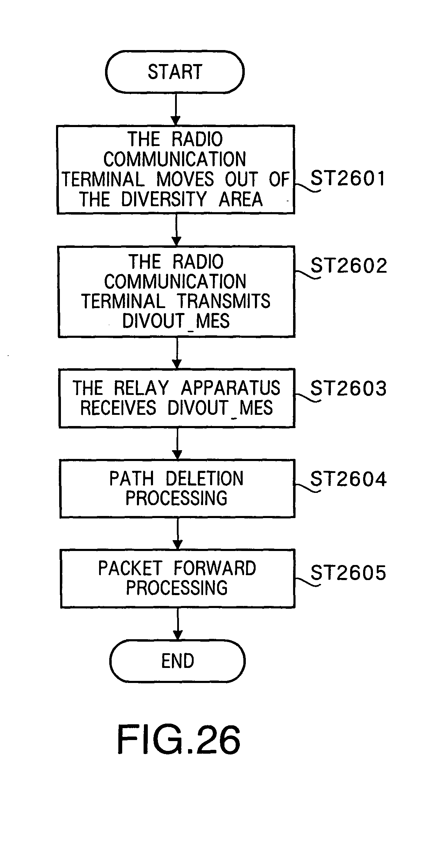

Referring to FIG. 26, the operation will be described below in relay apparatus 1501 when radio communication terminal 107 moves out of diversity area 110 (or completes handover).

When radio communication terminal 107 moves out of diversity area 110 (ST2601), the terminal 107 transmits DIVOUT_MES to server 117 (ST2602).

When DIVOUT_MES is passed through relay apparatus 1501 of the present invention during a period of time DIVOUT_MES arrives at server 117 that is the communicating party from radio communication terminal 107, relay apparatus 1501 receives DIVOUT_MES (ST2603).

Relay apparatus 1501 checks the content of DIVOUT_MES, and based on the content of DIVOUT_MES, performs processing for deleting the path to the base station 108 (ST2604). In addition, the path deletion processing in relay apparatus 1501 will be described later specifically.

When receiving a packet to radio communication terminal 107, relay apparatus 1501 forwards the packet to radio communication terminal 107 using forwarding table 103 (ST2605).

In addition, the processing in ST2605 is the same as the processing in FIG.25 except the packet copy processing in ST2506, and therefore, specific descriptions thereof are omitted.

The outline is as described above of the operation in relay apparatus 1501 when radio communication terminal moves out of diversity area 110.

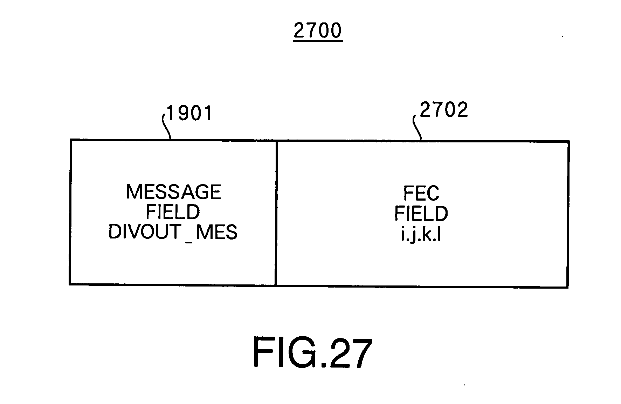

Referring to FIG.27, DIVOUT_MES will be described below that relay apparatus 1501 receives from radio communication terminal 107.

DIVOUT_MES is comprised of message field 1901 and FEC field 2702.

Message field 1901 describes a type of the message. The message field is to determine whether the packet is of message, and when the packet is of message, further determine the type of the message. In addition, determination on a packet may be made by assigning a specific number to EXP filed 1202 in the MPLS header, instead of providing message field 1901. In other words, it is only required to enable DIVOUT_MES 1900 to be identified.

FEC field 2702 is a field to store an address of a base station with which radio communication terminal 107 having moved out of diversity area 110 is currently communicating.

As described above, DIVOUT_MES 2700 includes the information for identifying a base station with which radio communication terminal 107 is currently communicating.

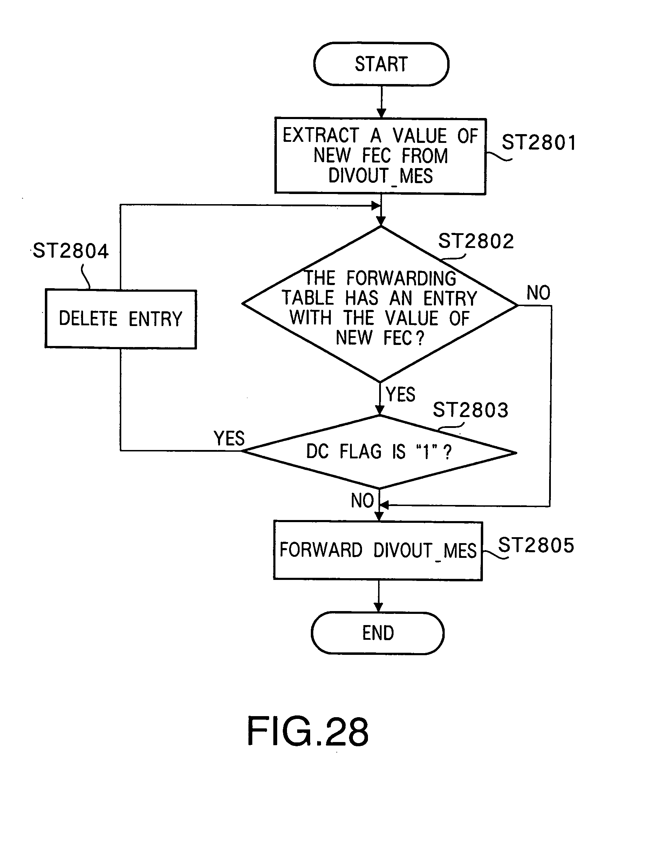

The path deletion processing (ST2604) in relay apparatus 1501 will be described below with reference to FIG.28.

Message data fetching section 114 in relay apparatus 1501 fetches a value of FEC 2702 from DIVOUT_MES, and provides information indicating that the arriving packet is DIVIN_MES and the value of FEC 2702 to table rewrite section 1603 (ST2801).

Table rewrite section 1603 searches forwarding table 103 in order starting with the top for an entry such that a value of FEC is the same as the value of FEC 2702 fetched from DIVOUT_MES (ST2802).

When detecting the entry such that the value of FEC is the same as the value of FEC 2702 fetched from DIVOUT_MES, table rewrite section 1603 checks a value of DC flag 406 in the entry (ST2803).

When the value of DC flag 406 in the entry is "1", since the entry is of information for forming a path to the base station of earlier communications, table rewrite section 1603 deletes the entry (ST2804), and shifts to the processing of ST2802 again.

When the value of DC flag 406 in the entry is "0", table rewrite section 1603 forwards DIVOUT_MES to a next relay apparatus and finishes the processing (ST2805).

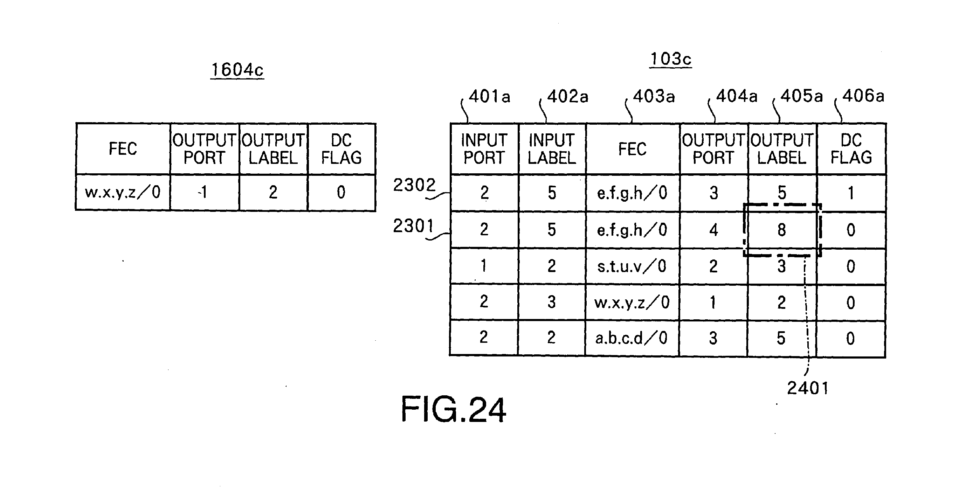

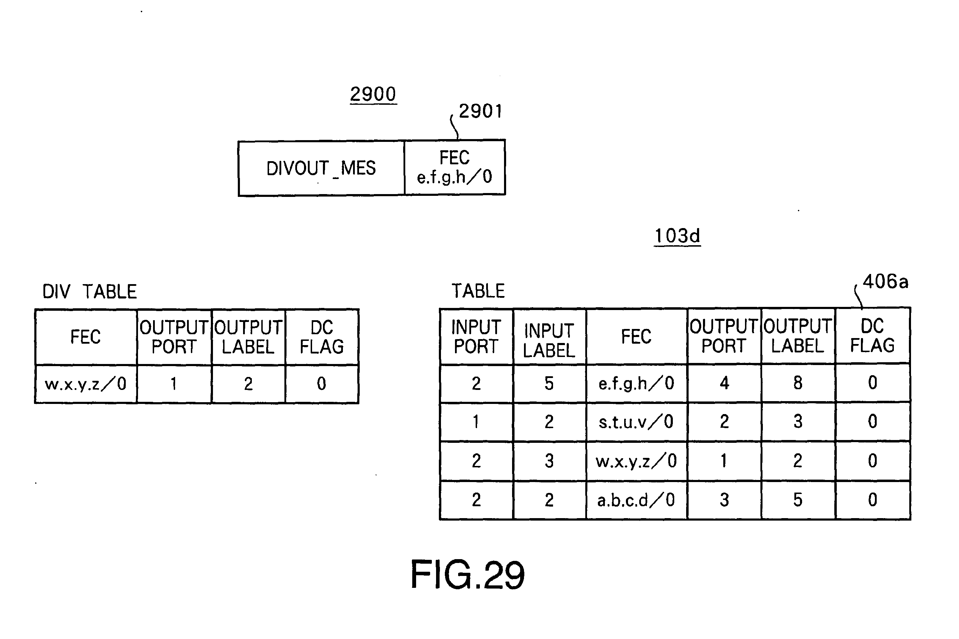

A specific example of the path deletion processing (ST2604) in relay apparatus 1501 will be described below with reference to FIGs.24 and 29.

Upon receiving DIVOUT_MES indicated by 2900, message data fetching section 114 in relay apparatus 1501 fetches a value of FEC 2901, and table rewrite section 1603 searches forwarding table 103c in order starting with the top, and detects entry 2304 with the same value as in FEC 2901 of DIVOUT_MES 2900 (ST2801 and ST2802).

Table rewrite section 1603 checks a value of DC flag 406a in entry 2304 (ST2803).

Since the value of DC flag 406 in entry 2304 is "1", table rewrite section 1603 deletes entry 2304 (ST2804)

Table write section 1603 searches forwarding table 103a continuously, and detects entry 2301 with the same value as in FEC 2901 of DIVOUT_MES 2900.

Table rewrite section 1603 checks a value of DC flag 406 in entry 2301 (ST2803).

Since the value of DC flag 406 in entry 2301 is "0", table rewrite section 1603 forwards DIVOUT_MES to a next relay apparatus, and finishes the processing.

Then, the table is in a state as shown in 103d.

In this way, relay apparatus deletes an entry used in communications with the base station 108 of earlier communications from forwarding table 103.

As described above, according to the second embodiment, when radio communication terminal 107 enters diversity area 110, relay apparatus 1501 stores the output port and output label information that is forward information corresponding to existing zone base station 108 in DIV table 1604, copies the information to forwarding table 103 in forming a path to peripheral zone base station 109 to associate with new FEC, input port and input label, and thereby is capable of forming paths not only to peripheral zone base station 109 corresponding to an area to which the terminal 107 moves, but also to existing zone base station 108 corresponding to an area with which communications have been carried out since an earlier time.

Further, as a result of storing the output port and output label information that is forward information in DIV table 1604, since it is possible to refer to the forward information for existing zone base station 108 with communications have been carried out since an earlier time in forming a new path, even when relay apparatus 1501 is not positioned at the end portion on the radio communication terminal 107 side on MPLS network, the apparatus 1501 is capable of forming a path to existing zone base station 108, as well as a path to peripheral zone base station 109.

### (Third embodiment)

The third embodiment of the present invention intends to cope with a case that DIVOUT_MES does not arrive at a relay apparatus from radio communication terminal 107 due to some reason. In other words, when a predetermined time elapses after the relay apparatus receives DIVIN_MES, irrespective of arrival of DIVOUT_MES, the apparatus deletes an entry on old FEC associated with received DIVIN_MES from forwarding table 103.

In this way, when DIVOUT_MES does not arrive at a relay apparatus from radio communication terminal 107 due to some reason, it is possible to prevent a situation where an unnecessary path is being formed continuously.

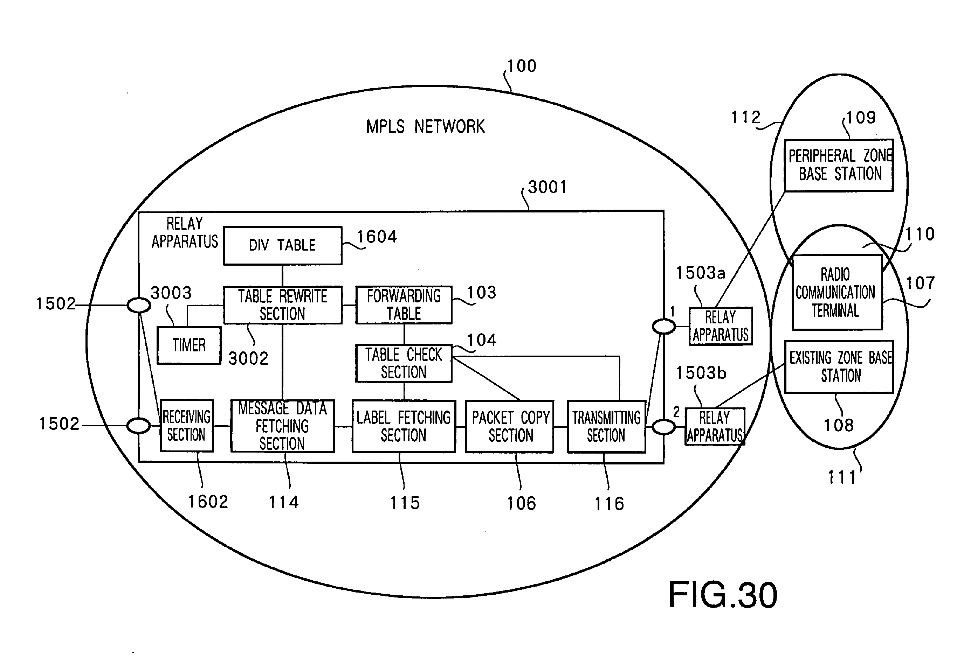

A relay apparatus according to the third embodiment will be described below with reference to FIG.30. In addition, the same sections as those described earlier are assigned the same reference numerals.

Relay apparatus 3001 according to the third embodiment is provided with timer 3003. Timer 3003 measures a time having elapsed since reception of DIVIN_MES. When a predetermined time (expiration time) has elapsed since reception of DIVIN_MES, timer 3003 notifies table rewrite section 3002 of the lapse.

The predetermined time (expiration time) for timer 3003 to measure may be stored in relay apparatus 3001 in advance, or may be included in DIVIN_MES transmitted from radio communication terminal 107.

In addition, when radio communication terminal 107 transmits the predetermined time for timer 3003 to measure included in DIVIN_MES, radio communication terminal 107 may transmit a time corresponding to the state of the terminal 107. For example, the terminal 107 may transmit a time with moving speed of the terminal 108 considered.

Upon receiving the notification of the lapse of predetermined time from the timer, table rewrite section 3002 deletes an entry associated with DIVIN_MES of the lapse of predetermined time from forwarding table 103.

More specifically, after the processing in ST2003 in FIG.20, table rewrite section 3002 sets timer 3003 for the expiration time of the relevant entry. Then, when the expiration time elapses, timer 3003 outputs a deletion instruction of the relevant entry to table rewrite section 3002, and table rewrite section 3002 deletes the entry.

After the processing in ST2211 in FIG.22, table rewrite section 3002 sets timer 3003 for the expiration time (constant time) of the copied entry. When the expiration time elapses, timer 3003 outputs a deletion instruction of the copied entry to table rewrite section 3002, and table rewrite section 3002 deletes the entry.

As described above, according to the third embodiment, when a predetermined time has elapsed since relay apparatus 3001 received DIVIN_MES, irrespective of arrival of DIVOUT_MES, the apparatus 3001 is capable of deleting an entry on old FEC associated with received DIVIN_MES from forwarding table 103. As a result, when DIVOUT_MES does not arrive at relay apparatus 3001 from radio communication terminal 107 due to some reason, it is possible to prevent a situation where an unnecessary path is being formed continuously.

In addition, by providing timer 3003, it is possible to construct a system where radio communication terminal 107 does not transmit DIVOUT_MES.

The communication network control apparatus according to the present invention is capable of copying a packet to forward on the MPLS network, and when data transmission is carried out in a combination of the MPLS network and wireless communication networks, occurrences of packet loss are eliminated even when a radio communication terminal moves and performs handover.

The present invention is not limited to the above described embodiments, and various variations and modifications may be possible without departing from the scope of the present invention.

This application is based on the Japanese Patent Application No.2003-004054 filed on January 10, 2003, and the Japanese Patent Application No.2003-416237 filed on December 15, 2003, entire contents of which are expressly incorporated by reference herein.

## Claims

1. A communication network control apparatus disposed on an MPLS network connected with a plurality of base stations, comprising:
a forwarding table(103) that associates an MPLS label with a plurality of pieces of forward information for forwarding a packet assigned the MPLS label to store;
a receiver(113) that receives the packet assigned the MPLS label;
a table checker(104) that determines a forward destination corresponding to the MPLS label of the packet using the forwarding table; and
a packet copier(106) that forwards the received packet to the forward destination determined in the table checker.

2. The communication network control apparatus according to claim 1, further comprising:
a table rewriter(105) that associates forward information corresponding to a base station and forward information corresponding to an adjacent base station with the MPLS label of the received packet stored in the forwarding table, according to changes in information indicating whether a radio communication terminal, to which the received packet is ultimately transmitted, exists in a diversity area of the base station and the adjacent base station.

3. The communication network control apparatus according to claim 2, wherein by receiving information indicating that the radio communication terminal enters the diversity area, the apparatus recognizes that the radio communication terminal enters the diversity area.

4. The communication network control apparatus according to claim 2, wherein when the radio communication terminal moves out of the diversity area, the table rewriter associates either the forward information corresponding to the base station or the forward information corresponding to the adjacent base station with the MPLS label of the received packet stored in the forwarding table.

5. The communication network control apparatus according to claim 4, wherein by receiving information including information indicating that the radio communication terminal movies out of the diversity area and information indicating a base station with which the radio communication terminal is communicating, the apparatus recognizes that the radio communication terminal moves out of the diversity area, and enters an area of either the adjacent base station or the base station.

6. The communication network control apparatus according to claim 1, wherein the forwarding table is extended from a basic table of MPLS.

7. A communication network control method on an MPLS network connected with a plurality of base stations, comprising:
preparing a forwarding table that associates anMPLS label with a plurality of pieces of forward information for forwarding a packet assigned the MPLS label to store;
receiving the packet assigned the MPLS label;
referring to the forwarding table;
determining a forward destination corresponding to the MPLS label of the checked packet; and
forwarding the received packet to the forward destination determined.

8. The communication network control apparatus according to claim 2, further comprising:
a DIV table(1604) that stores the forward information related to the base station when the radio communication terminal enters the diversity area,
wherein when the radio communication terminal enters the diversity area, the table rewriter(1603) extracts the forward information related to the base station stored in the DIV table, and associates the forward information corresponding to the base station and the forward information corresponding to the adjacent base station extracted from the DIV table with the MPLS label of the received packet stored in the forwarding table to store in the forwarding table.

9. The communication network control apparatus according to claim 2, further comprising:
a timer(3003) that measures an expiration time of the forward information corresponding to the base station,
wherein upon receiving information indicating that the expiration time of the forward information corresponding to the base station has elapsed from the timer, the table rewriter(3002) deletes the forward information corresponding to the base station from the forwarding table.

10. The communication network control apparatus according to claim 9, wherein the apparatus receives the expiration time from the radio communication terminal.
